# EUROPÄISCHE PATENTSCHRIFT

(11) **EP 1 336 234 B1**
(45) Veröffentlichungstag und Bekanntmachung des Hinweises auf die Patenterteilung: **24.09.2008**
(21) Anmeldenummer: 01993967.7
(22) Anmeldetag: 12.11.2001
(51) Int. Cl.: H02K 1/27

(54) **ANKER MIT GESCHICHTETEM BLECHPAKET**
ARMATURE WITH COATED LAMINATE BUNDLE
INDUIT CONSTITUE D'UN EMPILAGE DE TOLES

(30) Priorität: 11.11.2000 DE 10056036
(43) Veröffentlichungstag der Anmeldung: 20.08.2003
(73) Patentinhaber: ROBERT BOSCH GMBH, 70442 Stuttgart (DE)
(72) Erfinder: EVANS, Susanne, 77815 Buehl (DE); HERP, Juergen, 77815 Buehl (DE); HENSCHEL, Matthias, 77836 Rheinmuenster (DE); BUX, Harald, 73460 Huettlingen (DE)
(86) Internationale Anmeldenummer: PCT/DE2001/004210
(87) Internationale Veröffentlichungsnummer: WO 2002/039565

(56) Entgegenhaltungen:
- EP-A- 0 748 027
- EP-A- 0 909 003
- US-A- 5 581 140
- PATENT ABSTRACTS OF JAPAN vol. 2000, no. 10, 17. November 2000 (2000-11-17) & JP 2000 197291 A (FUJI ELECTRIC CO LTD), 14. Juli 2000 (2000-07-14)

## Beschreibung

### Stand der Technik

Die Erfindung geht aus von einem Anker nach der Gattung des Anspruchs 1. Eine solcher Anker ist aus EP-A-0 748 027 bekannt.

Aus der JP 2000152535 A ist ein Blechlaminatstapel bekannt, der nur offene Taschen für Magneten aufweist, in denen die Magnete durch Form- und Kraftschluß gehalten sind. Das einzelne Blechlaminat weist keinen äußeren Steg auf, der den Magnet an seinem äußeren Umfang hält. Die mechanische Belastung des Blechlaminats ist gross.

Aus der JP 09046946 A ist ein Blechlaminatstapel bekannt, in dem die Magnete vollständig in geschlossenen Taschen des Blechlaminats angeordnet sind. Durch das zusätzliche Eisen des Stegs, der die Magneten am äusseren Umfang umgreift, und der die Tasche verschließt, kommt es im Steg und im Randbereich des Magneten zu einem merkbaren Flußverlust, der zu einer Leistungsreduzierung einer elektrischen Maschine, für die der Blechlaminatstapel verwendet wird, führt.

Aus der US-PS 2.323.114 ist ein Blechpaket bekannt bei dem die Statorzähne zumindest teilweise voneinander getrennt sind.

Aus der US-PS 4,777,397 ist ein Anker bekannt, bei dem eine bestimmte Anzahl von Blechlaminaten nur geschlossene Taschen aufweisen, in denen der Magnet zumindest teilweise angeordnet ist. Die anderen Blechlaminate weisen nur offene Taschen auf, so dass der Magnet dort an seinem äußeren Umfang nicht von einem Blech umgeben ist. Die Magnete werden von einem Kleber in den offenen Taschen gesichert.
Hier werden zwei verschiedene Ausführungen von Blechlaminaten benötigt.

### Vorteile der Erfindung

Der erfindungsgemäße Anker mit den Merkmalen des Anspruchs 1 hat demgegenüber den Vorteil, dass auf einfache Art und Weise Magnete durch ein Blechpaket fixiert sind und der magnetische Magnetflußverlust reduziert ist.

Durch die in den abhängigen Ansprüchen aufgeführten Maßnahmen sind vorteilhafte Weiterbildungen und Verbesserungen des im Anspruch 1 genannten Ankers möglich.

Der Magnet wird nach Anspruch 1 dadurch im Blechpaket fixiert, dass er umspritzt wird. Dies kann beispielsweise durch Kunststoffspritzen erfolgen. So wird auch ein Schutz vor äusseren Umwelteinflüssen gewährleistet.

### Zeichnung

Ein Ausführungsbeispiel der Erfindung ist in der Zeichnung vereinfacht dargestellt und in der nachfolgenden Beschreibung näher erläutert.

Es zeigen
Figur 1 ein Blechlaminat für einen erfindungsgemäßen Anker,
Figur 2 ein Blechpaket, gebildet aus Blechlaminaten gemäß Figur 1,
Figur 3 einen erfindungsgemäßen Anker.

### Beschreibung des Ausführungsbeispiels

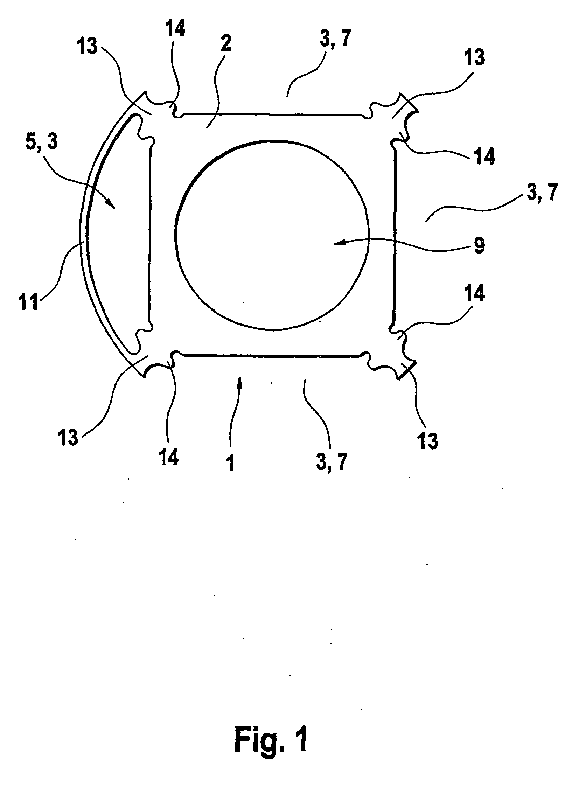

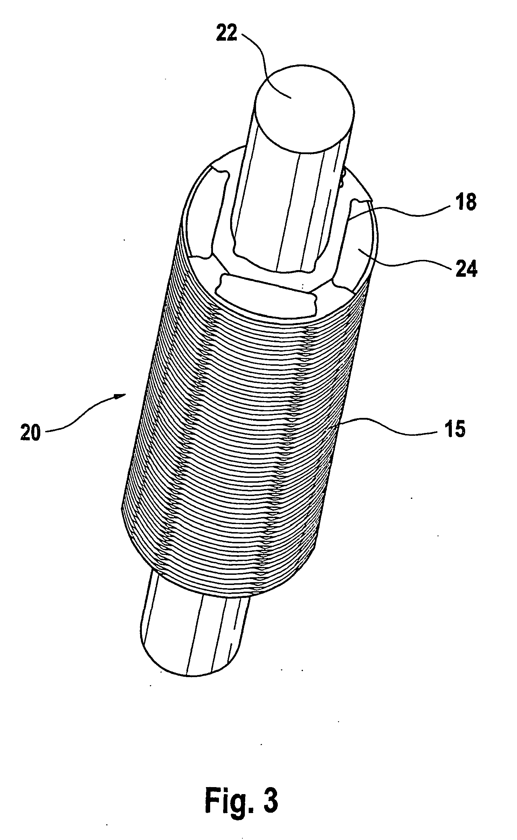

Figur 1 zeigt ein Blechlaminat 1, das aus einem Grundkörper 2 und mehreren Vorsprüngen 13, die von dem Grundkörper radial nach außen hervorstehen, gebildet ist.
Der im wesentlichen mit einer quadratischen Außenkontur versehene Grundkörper 2 weist in seiner Mitte ein Loch 9 auf, in dem eine Rotorwelle 22 (Fig. 3) angeordnet ist. Der Grundkörper 2 umschliesst die Rotorwelle 2 vollständig an ihrem äusseren radialen Umfang.
Die beispielsweise an Ecken des Grundkörpers 2 vorgesehenen Vorsprünge 13 bilden eine Tasche 3, in der ein Magnet 24 (Fig. 3) angeordnet ist. Das Blechlaminat 1 hat eine Anzahl n von Taschen 3. Eine Anzahl [n - m] Taschen, wobei m kleiner n und grösser als null ist, bilden bei zumindest einem Blechlaminat 1 geschlossene Taschen 5, die dadurch gebildet werden, daß ein Steg 11 zwei Vorsprünge 13 mit Abstand zum Grundkörper 2 miteinander verbindet. geschlossene Tasche 5. Die Zahl n beträgt also vier und die Zahl m beträgt drei, d.h. es gibt drei offene Taschen 7.
Die Vorsprünge 13 sind so ausgebildet, daß der magnetische Flußverlust in diesem Randbereich erheblich reduziert ist. An den Vorsprüngen 13 sind in die Taschen 3 hineingerichtete Nasen 14 vorgesehen, die die Magnete quasi punktuell führen und eine Verminderung von Flußverlusten bewirken.

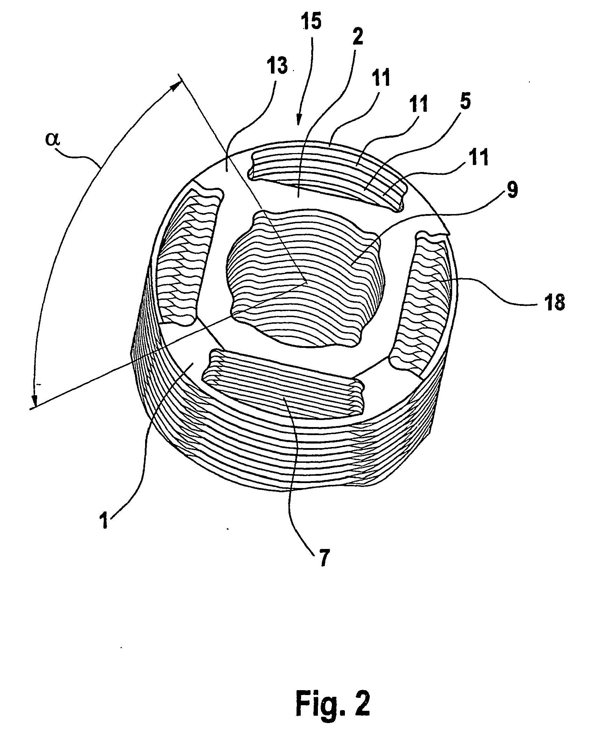

Figur 2 zeigt, wie die Blechlaminate 1 zu einem Blechpaket 15 angeordnet sind. In diesem Beispiel können in dem Blechpaket 15 vier Magnete 24 gehalten werden. Die Blechlaminate 1 des Blechpakets 15 können aber auch so ausgebildet sein, dass weniger aber auch mehr Magnete 24 vorhanden sein können.
Deshalb sind bspw. die direkt benachbarten Blechlaminate 1 beispielsweise um einen Winkel von 90° (360° durch Anzahl der Magnete oder n) fortlaufend zueinander verdreht. Durch diese Stapelung der zueinander verdrehten Blechlaminate 1 bilden sich durch die geschlossenen Taschen 5 vier Aufnahmen 18, in denen die Magnete 24 eingeführt werden und radial gesichert werden können.
Durch diese kammartige Struktur des Blechpakets 15 wird der magnetische Flußverlust erheblich reduziert. Die Blechlaminate 1 werden auf bekannte Art und Weise miteinander verbunden und bilden dann das Blechpaket 15. Es ist auch nur eine Ausführung eines Blechlaminats 1 notwendig, um das Blechpaket 15 zu bilden. Bei dem in Figur 2 gezeigten Ausführungsbeispiel sind nur an zwei Ecken des Grundkörpers 2 Vorsprünge 13 vorgesehen und durch den Steg 11 verbunden.

Der Anker 20 wird zumindest gebildet aus einer Rotorwelle 22, die in dem Loch 9 angeordnet ist und mit dem Blechpaket 15 fest verbunden ist. In den Aufnahmen 18 sind die Magnete 24 angeordnet. Der Magnet 24 wird beispielsweise u.a. durch eine Preßpassung in der Tasche 5, 7 des Blechlaminats 1 fixiert. Gemäß Anspruch 1 wird, das Blechpaket 15 mit den Magneten 24 umspritzt, beispielsweise durch eine Kunststoffumspritzung, wodurch der Magnet 24 im Blechpaket 15 fixiert sind. Ebenso können die Blechlaminate 1 durch die Umspritzung zu einem Blechpaket 15 fixiert werden.

Der erfindungsgemäße Anker 20 ist nicht auf dieses Ausführungsbeispiel beschränkt. Ebenso können bei einer Anzahl von vier Magneten auch zwei oder drei geschlossene Taschen 5 vorhanden sein, wobei dann die einzelnen Blechlaminate bspw. um einen Winkel von 180° gedreht sind. Jede andere Anzahl von offenen und geschlossenen Taschen 3, auch bei einer höheren oder kleineren Anzahl von Magneten, ist denkbar. Ebenso können in dem Blechpaket 15 stellenweise Blechlaminate 1 vorhanden sein, die nur offene Taschen 7 oder nur geschlossene Taschen 5 aufweisen.
Weiterhin muss nicht jedes Blechlaminat 1 gegenüber dem direkt benachbarten Blechlaminat 1 verdreht sein. Es können in einem Blechpaket 15 auch zwei oder mehr aufeinander folgende gleiche Blechlaminate 1 nicht gegeneinander verdreht sein, worauf dann zumindest ein Blechlaminat 1 folgt, das wiederum gegenüber diesen verdreht ist.

## Patentansprüche

1. Anker für eine elektrische Maschine, zumindest bestehend aus einer Rotorwelle, zumindest zwei Blechlaminaten, wobei zumindest ein Blechlaminat zumindest eine geschlossene Tasche aufweist, zumindest einem Magneten, der durch zumindest ein Blechlaminat gehalten ist, wobei der Magnet zumindest teilweise in der geschlossenen Tasche zumindest eines Blechlaminats angeordnet ist, wobei der Anker (20) eine Anzahl n von Magneten (24) aufweist, zumindest ein Blechlaminat (1) eine Anzahl [n-m] geschlossener Taschen (5) aufweist, wobei m kleiner als n und größer als null ist, und wobei zumindest ein Blechlaminat (1) in Umfangsrichtung gegenüber den anderen Blechlaminate (1) verdreht ist und diese zu einem Blechpaket (15) aufgestapelt sind, **dadurch gekennzeichnet, dass** der Magnet (24) durch Umspritzung des Blechpakets (15) fixiert ist.

2. Anker nach Anspruch 1, **dadurch gekennzeichnet, dass** ein Blechlaminat (1) eine Anzahl m von offenen Taschen aufweist, und dass der Magnet (24) durch Presspassung in zumindest einer Tasche (5,7) des zumindest einen Blechlaminats (1) fixiert ist.

## Claims

1. Armature for an electrical machine, at least comprising a rotor shaft, at least two laminates, with at least one laminate having at least one closed pocket, at least one magnet which is held by at least one laminate, with the magnet being arranged at least partly in the closed pocket of at least one laminate, with the armature (20) having a number n of magnets (24), at least one laminate (1) having a number [n-m] of closed pockets (5), with m being smaller than n and greater than zero, and with at least one laminate (1) being rotated in the circumferential direction in relation to the other laminates (1) and these being stacked to form a laminated core (15), **characterized in that** the magnet (24) is fixed by extrusion-coating the laminated core (15).

2. Armature according to Claim 1, **characterized in that** a laminate (1) has a number m of open pockets, and **in that** the magnet (24) is fixed in at least one pocket (5, 7) of the at least one laminate (1) by means of a press-fit.

## Revendications

1. Induit de machine électrique composé au moins d'un arbre de rotor, d'au moins deux empilages de tôles, au moins l'un des empilages de tôles ayant une cavité fermée, au moins un aimant tenu par au moins un empilage de tôles, l'aimant étant installé au moins partiellement dans la cavité fermée d'au moins un empilage de tôles, l'induit (20) comportant un nombre (n) d'aimants (24), au moins un empilages de tôles (1) comporte un nombre [n-m] de poches fermées (5), (m) étant inférieur à (n) et supérieur à zéro et au moins un empilage de tôles (1) est tournée par rapport à l'autre empilage de tôles (1) dans la direction périphérique et ces piles empilages forment un paquet de tôles (15),
**caractérisé en ce que**
l'aimant (24) est bloqué par enrobage par injection du paquet de tôles (15).

2. Induit selon la revendication 1,
**caractérisé en ce qu'**
un empilage de tôles (1) comporte un nombre (m) de cavités ouvertes et l'aimant (24) est bloqué par un ajustage pressé dans au moins l'une des cavités (5, 7) d'au moins un empilage de tôles (1).
